# EUROPÄISCHE PATENTANMELDUNG

(11) **EP 0 922 979 A1**
(43) Veröffentlichungstag der Anmeldung: **16.06.1999**
(21) Anmeldenummer: 98123575.7
(22) Anmeldetag: 10.12.1998
(51) Int. Cl.: G02B 6/44, H02G 15/076

(54) **Abschlusseinheit für Lichtwellenleiter-Kabel**

(30) Priorität: 12.12.1997 DE 29721956 U
(71) Anmelder: BICC KWO Kabel GmbH, 12459 Berlin (DE)
(72) Erfinder: Schuessler, Peter, 12209 Berlin (DE)

(57) **Zusammenfassung**

Garnitur für Lichtwellenleiter-Kabel, bei der scheibenförmige Module (2) mit ihrer Breitseite nebeneinander liegend sowie Elektronikbauteile wie Leiterplatten (3) in stapelförmiger Anordnung auf einer Grundplatte (1) befestigt sind und die so montierte Grundplatte in ein der Form der Grundplatte angepaßtes Rohrgehäuse (4) über Schienen eingeschoben ist und Deckel mit Kabeldurchführungen stirnseitig mittels Dichtring und Verschraubungen aufgesetzt sind.

## Beschreibung

Die Erfindung betrifft eine Garnitur für Lichtwellenleiter-Kabel, die in schwer zugänglichen Räumen einsetzbar ist. Da Lichtwellenleiter-Kabel nicht unbegrenzt lang hergestellt werden können, müssen abschnittsweise Muffenkonstruktionen, Streckenverstärker, Verteiler für Abzweigungen und Endabschlüsse eingesetzt werden.
In der DE 43 08 228 C1 wird ein Verteiler für Lichtwellenleiterkabel beschrieben, bei dem Überlängen des ankommenden Kabels und auch Überlängen der abgehenden Lichtwellenleiter über Spleiße und Koppler in einem gehäuseartigen geschlossenen Modul untergebracht sind. Dabei werden zwei Module, die Fasern des gleichen Leitungszugs mit unterschiedlichen Funktionen aufnehmen, zur Einsparung von Reservelängen als Baueinheit zusammengefaßt. Die Baueinheiten mit ihren Gehäusen sind zu einem Gehäusestapel zusammengefaßt, der wiederum in einem Schranksystem mit Schwenkrahmen eingebaut sein kann. Ebenso wird in der DE 40 30 310 A1 eine Konstruktion für Fernsprechvermittlungsanlagen vorgestellt, die übereinander angeordnete schwenkbare Aufnahmen für Koppelelemente aufzeigt, die über Schwenkachsen und Zahnsegmenten am Gestell befestigt sind. Die blockartig angeordneten Aufnahmen können zum Zweck der Montage aus der Reihe der übrigen einzeln herausgeschwenkt werden.

Darüber hinaus erläutert die DE 43 34 022 C1 eine sogenannte Topfmuffe. Die Spleißkassetten werden auf Kassetten-Trägerplatten senkrecht nebeneinander angeordnet und diese sind im Aufnahmegehäuse ein- und ausschiebbar gelagert.

Die bekannten Module, Baueinheiten oder Spleißkassetten sind zwar kompakt angeordnet, bedingen jedoch einen sperrigen Aufbau beispielsweise in Schränken oder runden Gehäusen wie Topfmuffsen.

Es ist üblich, die Kabelinstallationseinheit von der Elektronik zur optisch/elektronischen bzw. elektrisch/optischen Signalumsetzung zu trennen. Nach der DE 4037 337 A1 ist die Elektronik in einem separaten wasserdichten Schutzgehäuse untergebracht. Zwischen Kabelinstallationseinheit und Elektronik-Schutzgehäuse ist eine Schnittstelle mittels Steckerkonstruktion vorgesehen. Durch diese Konfiguration sind zwei wasserdichte Gehäuse notwendig, die einen erhöhten Aufwand für die Gehäuse-Konstruktion bedingen.

Der Erfindung liegt die Aufgabe zugrunde, eine Garnitur für Lichtwellenleiter-Kabel zu entwickeln, die mit geringem Herstellungsaufwand sowohl Verbindungselemente als auch elektronische Bauelemente in einem Gehäuse einschließt und eine extrem flache Bauform aufweist.

Diese Aufgabe wird dadurch gelöst, daß scheibenförmige Module mit ihrer Breitseite nebeneinander liegend sowie Elektronikbauteile wie Leiterplatten in stapelförmiger Anordnung auf einer Grundplatte befestigt sind und die so montierte Grundplatte in ein der Form der Grundplatte angepaßtes Rohrgehäuse über Schienen eingeschoben ist und Deckel mit Kabeldurchführungen stirnseitig mittels Dichtring und Verschraubungen aufgesetzt sind. Zur besseren Montierbarkeit sind die Module auf der Grundplatte drehbar. Das Rohrgehäuse besitzt eine viereckige Form. Die Länge der Garnitur ist entsprechend der Anzahl der Module variabel. Die Fasern der Kabel können basierend auf der Accenttechnik unterschiedlich in der Garnitur zugeordnet werden. Die in Reihe mit ihrer Breitseite aufgesetzten Module gestatten eine flache Ausführungsform, die für beengte Räumlichkeiten prädestiniert ist. Die Erfindung wird nachstehend an einem Ausführungsbeispiel näher beschrieben.

In der zugehörigen Zeichnung zeigen
Fig. 1 das Gehäuse
Fig. 2 die montiert Grundplatte.

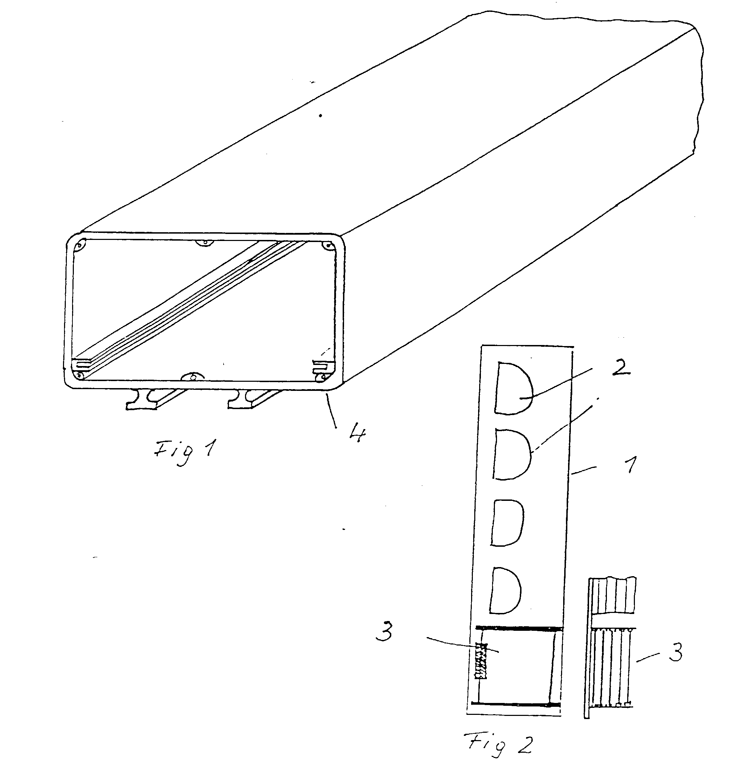

Auf die Grundplatte 1 werden die Module 2 mit ihrer Breitseite befestigt. Die Länge der Grundplatte ist von der Anzahl der Module abhängig. Auf der Grundplatte werden ebenfalls Leiterplatten 3 in stapelförmiger Anordnung fixiert. Die so montierte Grundplatte wird in ein viereckiges Rohrgehäuse 4 über Befestigungsschienen eingeschoben. Das Gehäuse wird stirnseitig mittels Deckel feuchtigkeitsdicht verschlossen.

## Patentansprüche

1. Garnitur für Lichtwellenleiter-Kabel bestehend aus leichtzugänglichen Modulen und Elektronikbauteilen, die wasserdicht angeordnet sind, dadurch gekennzeichnet, daß scheibenförmige Module (2) mit ihrer Breitseite nebeneinander liegend sowie Elektronikbauteile wie Leiterplatten (3) in stapelförmiger Anordnung auf einer Grundplatte (1) befestigt sind und die so montierte Grundplatte in ein der Form der Grundplatte angepaßtes Rohrgehäuse (4) über Schienen eingeschoben ist und Deckel mit Kabeldurchführungen stirnseitig mittels Dichtring und Verschraubungen aufgesetzt sind.

2. Garnitur nach Anspruch 1, dadurch gekennzeichnet, daß das Rohrgehäuse (4) eine viereckige Form besitzt.

3. Garnitur nach Anspruch 1 und 2, dadurch gekennzeichnet, daß die Module auf der Grundplatte drehbar gelagert sind.
